# EUROPÄISCHE PATENTSCHRIFT

(11) **EP 3 449 344 B1**
(45) Veröffentlichungstag und Bekanntmachung des Hinweises auf die Patenterteilung: **21.02.2024**
(21) Anmeldenummer: 17713598.5
(22) Anmeldetag: 20.03.2017
(51) Int. Cl.: G06F 3/0481

(54) **GERÄTEZUGRIFFSSOFTWARE MIT UMSCHALTBAREM DARSTELLUNGSMODUS**
DEVICE ACCESS SOFTWARE WITH SWITCHABLE DISPLAY MODE
LOGICIEL D'ACCÈS À DES APPAREILS DOTÉ DE MODES DE REPRÉSENTATION COMMUTABLES

(30) Priorität: 25.04.2016 DE 102016107643
(43) Veröffentlichungstag der Anmeldung: 06.03.2019
(73) Patentinhaber: Endress+Hauser Process Solutions AG, 4153 Reinach (CH)
(72) Erfinder: LUBER, Werner, 4123 Allschwil (CH); SOTRIFFER, Ingomar, 79588 Efringen-Kirchen (DE); MAYER, Michael, 4104 Oberwil (CH); PFLUG, Jan, 4056 Basel (CH)
(74) Vertreter: Trenkle, Dennis
(86) Internationale Anmeldenummer: PCT/EP2017/056575
(87) Internationale Veröffentlichungsnummer: WO 2017/186409

(56) Entgegenhaltungen:
- DE-A1-102014 108 126
- DE-U1-202006 005 761
- US-A1- 2008 266 255
- US-A1- 2012 185 065
- US-A1- 2014 359 458

## Beschreibung

Die Erfindung betrifft ein Verfahren zum Ändern des Darstellungsmodus einer Gerätezugriffssoftware, mit der auf Komponenten eines Feldbussystems zugegriffen werden kann. Des Weiteren betrifft die Erfindung eine Gerätezugriffssoftware, mit der auf Komponenten eines Feldbussystems zugegriffen werden kann.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Die Parametrierung, Konfiguration und Zustandsüberwachung der Feldgeräte eines Feldbussystems erfolgt in der Regel mittels einer auf einem Host installierten Gerätezugriffssoftware. In der Regel umfasst die Gerätezugriffssoftware eine Mehrzahl von Treibern, mit denen auf die Komponenten des Feldbussystems zugegriffen werden kann. Über die Benutzeroberflächen der in die Gerätezugriffssoftware eingebundenen Treiber kann der Benutzer vom Host aus Eingaben tätigen und Parameterwerte setzen oder ändern. Dabei wäre es vorteilhaft, die Gerätezugriffssoftware abhängig von äußeren Bedingungen oder Benutzereingaben zwischen unterschiedlichen Darstellungsmodi umschalten zu können. US2014359458 offenbart ein Verwaltungssystem für intelligente Feldgeräte, die in Industrieanlagen verwendet werden und verfügt über eine grafische Benutzeroberfläche (GUI), die für die Anzeige von Daten konfiguriert ist, die mit Feldgeräten gemäß Schnittstellenstandards verknüpft sind.

Es ist Aufgabe der Erfindung, eine Umschaltung zwischen unterschiedlichen Darstellungsmodi der Gerätezugriffssoftware zu vereinfachen.

Gelöst wird diese Aufgabe durch die in den Ansprüchen 1 und 14 angegebenen Merkmale.

Vorteilhafte Weiterentwicklungen der Erfindung sind in den Unteransprüchen angegeben.

Ein Verfahren entsprechend den Ausführungsformen der Erfindung dient zum Ändern des Darstellungsmodus einer Gerätezugriffssoftware, mit der auf Komponenten eines Feldbussystems zugegriffen werden kann. Die Gerätezugriffssoftware umfasst eine Rahmenapplikation und mindestens eine in die Rahmenapplikation eingebundene Treiber- oder Nutzsoftwarekomponente, wobei zwischen der Rahmenapplikation und der mindestens einen Treiber- oder Nutzsoftwarekomponente jeweils eine Schnittstelle vorgesehen ist. Das Verfahren umfasst das Umschalten der Rahmenapplikation von einem ersten Darstellungsmodus in einen vom ersten Darstellungsmodus verschiedenen zweiten Darstellungsmodus und das Ändern von mindestens einem Parameter zumindest in einem Teil der Treiber- oder Nutzsoftwarekomponenten über die jeweilige Schnittstelle, wobei die Änderung des mindestens einen Parameters eine Umschaltung des Darstellungsmodus vom ersten Darstellungsmodus zum zweiten Darstellungsmodus in mindestens einer Treiber- oder Nutzsoftwarekomponente des Teils der Treiber- oder Nutzsoftwarekomponenten bewirkt.

Entsprechend diesem Verfahren wird also jeweils dann, wenn der Darstellungsmodus der Rahmenapplikation von einem ersten zu einem zweiten Darstellungsmodus umgeschaltet wird, über die Schnittstelle zwischen Rahmenapplikation und Treibern mindestens ein Parameter geändert, so dass die Treiber über die Änderung des Darstellungsmodus der Rahmenapplikation informiert werden. Auf Seiten der Treiber kann dann der Darstellungsmodus entsprechend zur Rahmenapplikation umgeschaltet werden, sofern auch der jeweilige Treiber diese Darstellungsmodi unterstützt.

Bei einer Gerätezugriffssoftware werden in eine Rahmenapplikation eine Vielzahl von unterschiedlichen Treiber- und Nutzsoftwarekomponenten von unterschiedlichen Herstellern eingebunden, so dass sich die Gerätezugriffssoftware als heterogene Softwareumgebung darstellt. Durch das vorstehend beschriebene Verfahren wird durch den Austausch von Parametern über eine vordefinierte Schnittstelle erreicht, dass in diesem heterogenen Umfeld eine koordinierte Umschaltung zwischen unterschiedlichen Darstellungsmodi durchgeführt werden kann. Dies ist beispielsweise auch dann möglich, wenn unterschiedliche Treiber- und Nutzsoftwarekomponenten von unterschiedlichen Herstellern zusammenwirken. Dadurch wird auf der grafischen Benutzeroberfläche der Gerätezugriffssoftware eine gemeinsame Umschaltung des Darstellungsmodus in den Anzeigebereichen der Rahmenapplikation und der Treiber erreicht. Auf diese Weise kann die Darstellung von Daten auf der grafischen Benutzeroberfläche an geänderte Umgebungsbedingungen und an geänderte Erfordernisse angepasst werden. Beispielsweise kann die Anzeige von Daten entweder in einem Touch-Modus mit einem für Touchbedienung geeigneten Layout oder in einem für herkömmliche Eingabe mittels Tastatur und Maus geeigneten Nicht-Touch-Modus erfolgen. Durch die koordinierte Umschaltung zwischen verschiedenen Darstellungsmodi wird die Benutzerfreundlichkeit verbessert, weil durch die Möglichkeit der Anpassung an unterschiedliche Bedingungen und Erfordernisse die Benutzereingaben erleichtert werden.

Die Umschaltung zwischen verschiedenen Darstellungsmodi kann entweder manuell über geeignete Schaltflächen der grafischen Benutzeroberfläche oder aber automatisch in Abhängigkeit von vordefinierten Ereignissen durchgeführt werden. Wenn die Anpassung des Darstellungsmodus an die Umgebungsbedingungen automatisch erfolgt, wird das vom Benutzer als besonders komfortabel wahrgenommen.

Eine Gerätezugriffssoftware entsprechend den Ausführungsformen der Erfindung, mit der auf Komponenten eines Feldbussystems zugegriffen werden kann, umfasst eine Rahmenapplikation und mindestens eine in die Rahmenapplikation eingebundene Treiber- oder Nutzsoftwarekomponente, wobei zwischen der Rahmenapplikation und der mindestens einen Treiber- oder Nutzsoftwarekomponente jeweils eine Schnittstelle vorgesehen ist. Die Rahmenapplikation ist zwischen einem ersten Darstellungsmodus und einem vom ersten Darstellungsmodus verschiedenen zweiten Darstellungsmodus umschaltbar. Die Rahmenapplikation ist dazu ausgelegt, bei einer Änderung des Darstellungsmodus über die jeweilige Schnittstelle zumindest in einem Teil der Treiber- oder Nutzsoftwarekomponenten mindestens einen Parameter zu ändern, wobei die Änderung des mindestens einen Parameters eine Umschaltung des Darstellungsmodus vom ersten Darstellungsmodus zum zweiten Darstellungsmodus in mindestens einer Treiber- oder Nutzsoftwarekomponente des Teils der Treiber- oder Nutzsoftwarekomponenten bewirkt.

Nachfolgend ist die Erfindung anhand von in der Zeichnung dargestellten Ausführungsbeispielen näher erläutert. Es zeigen:
Fig. 1 ein Feldbussystem zusammen mit einer zugehörigen Gerätezugriffssoftware, die eine Rahmenapplikation und mehrere in die Rahmenapplikation eingebundene Treiber umfasst;
Fig. 2 eine grafische Benutzeroberfläche der Gerätezugriffssoftware;
Fig. 3 ein in eine Dockingstation einsteckbares Tablet, das wahlweise mittels Tastatur und Maus oder über Toucheingabe bedienbar ist; und
Fig. 4 einen Kommunikationsablauf bei der koordinierten Umschaltung des Darstellungsmodus der Rahmenapplikation und der Treiber.

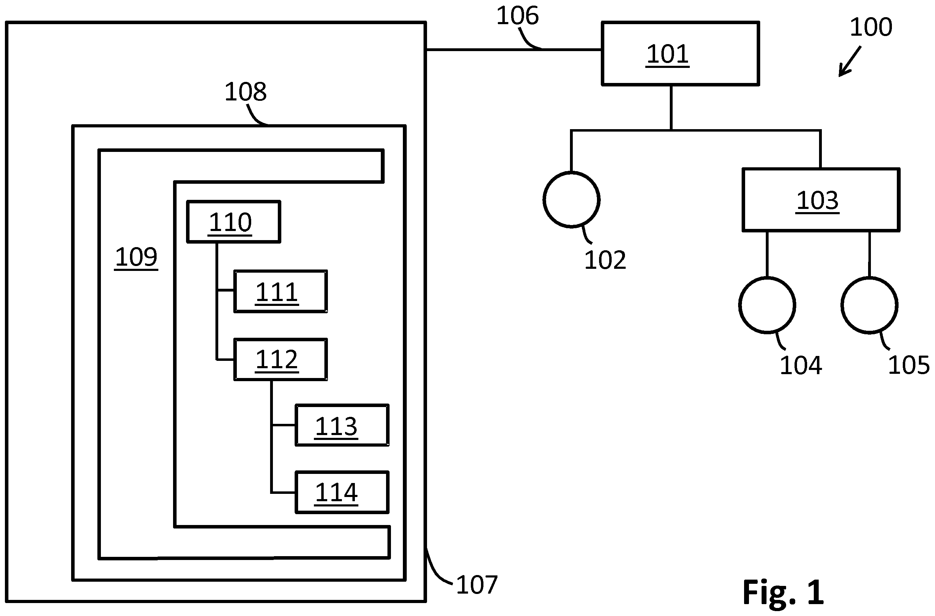

In Fig. 1 ist ein Feldbusnetzwerk 100 mit mehreren hierarchisch angeordneten Feldbussegmenten gezeigt. Das Feldbusnetzwerk 100 umfasst ein Feldzugangsgerät 101, ein Feldgerät 102 sowie einen Gateway 103. An dem Gateway 103 sind die beiden Feldgeräte 104, 105 angeschlossen.

An das Feldzugangsgerät 101 ist über eine Ethernet-Verbindung 106 ein Host 107 angeschlossen, auf dem eine Gerätezugriffssoftware 108 installiert ist. Über die Gerätezugriffssoftware 108 werden vom Host 107 aus die Komponenten des Feldbusnetzwerks 100 konfiguriert und parametriert. Insbesondere können von der Gerätezugriffssoftware 108 aus die Parameter der verschiedenen Komponenten des Feldbusnetzwerks 100 ausgelesen, dargestellt und verändert werden. Der für diese Aufgaben erforderliche Datenaustausch wird in der Regel über den sogenannten azyklischen Datenverkehr abgewickelt.

Um die verschiedenen Komponenten des Feldbusnetzwerks 100 korrekt ansprechen zu können, benötigt die Gerätezugriffssoftware 108 Informationen über die Eigenschaften und Parameter der Feldgeräte, Gateways, Remote I/Os etc. des Feldbusnetzwerks 100. Diese Informationen werden von den Herstellern der unterschiedlichen Geräte in der Regel in Form von Gerätebeschreibungsdateien oder Gerätetreibern zur Verfügung gestellt. Zur Gerätebeschreibung für den azyklischen Datenaustausch werden bei den Feldbusprotokollen Profibus-DP, Profibus-PA, Fieldbus Foundation und HART Gerätebeschreibungen gemäß den Standards DTM (Device Type Manager), DD (Device Description), EDD (Enhanced Device Description) sowie FDI Device Packages verwendet. Insbesondere bei den Standards EDD und DTM werden zusätzlich zu Geräteparametern, Gerätefunktionalität und Adressraumbelegung auch Grafikfeatures und grafische Benutzeroberflächen spezifiziert, die die Parametrierung und Konfigurierung des jeweiligen Feldgeräts erleichtern sollen. Zur Erzeugung dieser grafischen Oberflächen sind im Standard EDD spezielle Grafikbefehle vorgesehen, die nach Art einer Interpreter-Sprache abgearbeitet werden.

Im Standard FDT/DTM werden die DTMs (Device Type Manager) in Form von dynamisch ladbaren Bibliotheken (DLLs) oder in Form von ausführbaren Dateien (Executables) zur Verfügung gestellt. Ein DTM umfasst auch die genannten Grafikfeatures. Die verschiedenen DTMs zu den verschiedenen Komponenten des Feldbusnetzwerks werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können.

Der FDT-Standard wird in den nächsten Jahren zunehmend durch den Standard FDI Device Packages ergänzt und später eventuell ersetzt.

Neben den bisher diskutierten Feldbusprotokollen Profibus, Fieldbus Foundation und HART gewinnen die sogenannten Industrial Ethernet-Protokolle an Bedeutung, zu denen u.a. die Feldbusprotokolle EtherNet/IP, ProfiNet und EtherCAT gehören.

Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen.

Im Beispiel von Fig. 1 umfasst die Gerätezugriffssoftware 108 eine Rahmenapplikation 109, wobei in die Rahmenapplikation 109 unterschiedliche Device Type Manager (DTMs), also Treiber für die verschiedenen Geräte und Komponenten des Feldbusnetzwerks 100, eingebunden werden können. Dabei können DTMs von unterschiedlichen Herstellern eingebunden werden. Darüber hinaus ist es auch möglich, andere Gerätebeschreibungsdateien in die Rahmenapplikation 109 einzubinden. Zur Beschreibung des Feldbusnetzwerks 100 können in die Rahmenapplikation 109 beispielsweise eine Anzahl von unterschiedlichen Geräte-DTMs, Gateway-DTMs und Kommunikations-DTMs eingebunden werden. Dabei wird die hierarchische Struktur des Feldbusnetzwerks 100 innerhalb der Gerätezugriffssoftware 108 mit Hilfe von Treibern bzw. Gerätebeschreibungsdateien nachgebildet. Die Anordnung der Treiber bzw. Gerätebeschreibungsdateien entspricht dabei spiegelbildlich der Struktur des Feldbusnetzwerks 100. An oberster Stelle der DTM-Hierarchie steht der Kommunikations-DTM 110. Der Kommunikations-DTM 110 ist dem Feldzugangsgerät 101 zugeordnet und kommuniziert mit diesem über die Ethernet-Verbindung 106. Der Kommunikations-DTM 110 stellt in gewisser Weise die Außenschnittstelle der Gerätezugriffssoftware 108 dar. Sämtlicher ein- und ausgehende Datenverkehr wird über den Kommunikations-DTM 110 geführt.

Der Geräte-DTM 111 ist in der DTM-Hierarchie unterhalb des Kommunikations-DTM 110 angeordnet und bildet die Funktionalität des Feldgeräts 102 ab. In der Ebene unterhalb des Kommunikations-DTM 110 ist außerdem ein Gateway-DTM 112 angeordnet, der dem Gateway 103 zugeordnet ist. Über den Gateway-DTM 112 kann der Gateway 103 parametriert und konfiguriert werden. Unterhalb des Gateway-DTM 112 in der DTM-Hierarchie sind zwei Geräte-DTMs 113, 114 angeordnet. Der Geräte-DTM 113 bildet die Funktionalität des Feldgeräts 104 ab, und der Geräte-DTM 114 bildet die Funktionalität des Feldgeräts 105 ab. Neben dem Standard FDT/DTM gibt es eine Vielzahl von alternativen Standards für die Gerätezugriffssoftware und die darin eingebundenen Gerätetreiber.

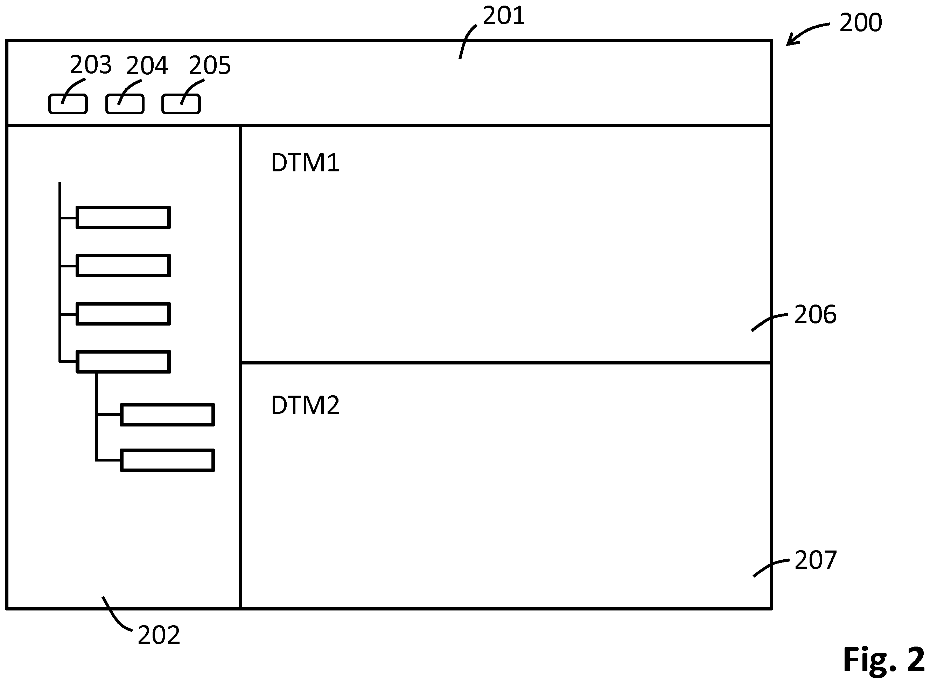

In Fig. 2 ist die grafische Benutzeroberfläche 200 der Gerätezugriffssoftware 108 dargestellt, welche beispielsweise auf einem Bildschirm oder Display eines PCs, eines Tablets, eines Laptops, eines Mobiltelefons oder eines anderen mobilen Endgeräts angezeigt wird. Über diese grafische Benutzeroberfläche 200 kann auf die einzelnen Feldgeräte und Komponenten des Feldbusnetzwerks 100 zugegriffen werden. Beispielsweise können der Status sowie einzelne Parameter der unterschiedlichen Feldgeräte abgefragt werden, außerdem kann über die grafische Benutzeroberfläche 200 eine Parametrierung und Konfigurierung der einzelnen Feldgeräte und sonstigen Komponenten des Feldbusnetzwerks 100 vorgenommen werden.

Wie anhand von Fig. 2 erkennbar ist, umfasst die grafische Benutzeroberfläche 200 der Gerätezugriffssoftware 108 einen Anzeigebereich für die Rahmenapplikation 109, der beispielsweise eine Menüleiste 201 sowie eine Baumdarstellung 202 des gesamten Feldbusnetzwerks umfassen kann, wobei in der Menüleiste 201 mehrere Schaltflächen 203 bis 205 angeordnet sind. Darüber hinaus kann die grafische Benutzeroberfläche 200 aber auch ein oder mehrere Anzeigefenster 206, 207 der einzelnen Treiber umfassen, wobei über diese Anzeigefenster 206, 207 eine Interaktion mit den einzelnen in die Rahmenapplikation 109 eingebundenen DTMs erfolgen kann. Beispielsweise können in den Anzeigefenstern 206, 207 Statusdaten und Parameter der einzelnen DTMs angezeigt werden, außerdem besteht die Möglichkeit, dass der Benutzer die jeweilige Konfiguration der DTMs abändert.

Es gibt Situationen, in denen während des laufenden Betriebs der Gerätezugriffssoftware 108 das Bedürfnis besteht, den Darstellungsmodus der grafischen Benutzeroberfläche 200 zu verändern, beispielsweise um die grafische Benutzeroberfläche 200 an geänderte Gegebenheiten oder Bedürfnisse anzupassen. Beispielsweise könnte der Benutzer von einer Eingabe über Tastatur und Maus eines stationären PCs zu einer Eingabe über das Touchdisplay eines Tablets oder eines mobilen Endgeräts wechseln wollen, beispielsweise um direkt vor Ort ein jeweiliges Feldgerät neu zu konfigurieren. In diesem Fall wäre es wünschenswert, wenn der Darstellungsmodus während des laufenden Betriebs von einer für die PC-Eingabe geeigneten Anzeige zu einer für Eingaben über das Touchdisplay geeigneten Anzeige umschalten könnte, wobei im Touch-Modus beispielsweise die verschiedenen Icons und Anzeigefelder vergrößert dargestellt werden sollten, damit eine einfache Touchbedienung ermöglicht wird. Die Umschaltung sollte zur Laufzeit möglich sein, ohne dass hierzu die Rahmenapplikation 109 und die darin eingebundenen Treiber neu gestartet werden müssen. Dabei sollte die Umschaltung des Darstellungsmodus sowohl den Anzeigebereich der Rahmenapplikation 109 als auch die verschiedenen Anzeigefenster 206, 207 von verschiedenen Treibern umfassen. Dabei kann die Umschaltung des Darstellungsmodus entweder durch Betätigen einer der Schaltflächen 203 bis 205 oder aber durch ein vordefiniertes Ereignis ausgelöst werden.

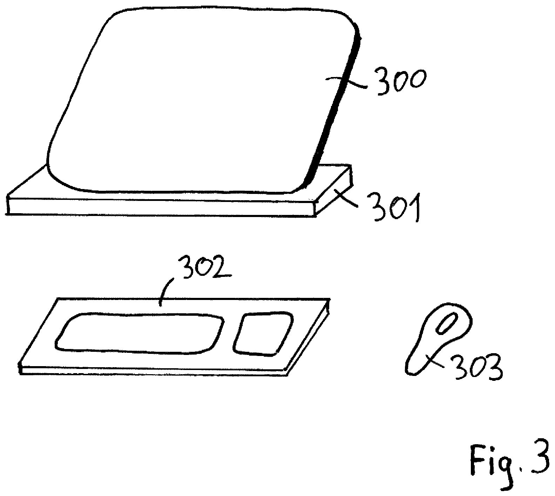

Beispielsweise ist in Fig. 3 ein Tablet 300 gezeigt, das in eine Dockingstation 301 eingesteckt ist und im eingesteckten Zustand über die Tastatur 302 und die Maus 303 bedient werden kann. Im eingesteckten Zustand befindet sich das Tablet 300 im Nicht-Touch-Modus. Sobald das Tablet 300 aus der Dockingstation 301 entnommen wird, wird der Darstellungsmodus auf den Touch-Modus umgeschaltet, wobei die Darstellung auf eine für Toucheingaben geeignete Größe gebracht wird. Durch das Ereignis des Aus- und Einsteckens wird also der Darstellungsmodus des Tablets 300 zwischen dem Touch-Modus und dem Nicht-Touch-Modus umgeschaltet.

Alternativ zur Umschaltung zwischen Touch-Modus und Nicht-Touch-Modus gibt es noch andere Situationen, in denen eine Umschaltung zwischen verschiedenen Darstellungsmodi sinnvoll ist. Beispielsweise kann ein Tablet entweder im Querformat oder im Hochformat gehalten und bedient werden. Insofern könnte man hier in Abhängigkeit von der durch den Neigungssensor des Tablets angezeigten Orientierung eine Umschaltung zwischen einem für Querformat geeigneten Darstellungsmodus und einem für Hochformat geeigneten Darstellungsmodus vornehmen, wobei durch eine Änderung der Orientierung zur Laufzeit der FDT-Rahmenapplikation und der darin eingebundenen Treiber eine entsprechende Umschaltung des Darstellungsmodus veranlasst wird.

Darüber hinaus könnte es sinnvoll sein, die Darstellung auf der grafischen Benutzeroberfläche 200 in Abhängigkeit von der für die Anzeige zur Verfügung stehenden Displaygröße anzupassen. In diesem Fall würde die Rahmenapplikation 109 aus den Systemeinstellungen der verwendeten Hardware die Displaygröße auslesen und den Darstellungsmodus in Abhängigkeit von der so gefundenen Displaygröße auswählen. Alternativ dazu könnte die Größe der Darstellung durch Betätigen einer der Schaltfläche 203 bis 205 umgestellt werden.

Darüber hinaus wäre es möglich, in Abhängigkeit von der Umgebungshelligkeit eine Umschaltung zwischen verschiedenen Darstellungsmodi vorzunehmen, wobei die Umgebungshelligkeit beispielsweise mittels eines Helligkeitssensors erfasst werden könnte. Bei schlechter Beleuchtung würde man dementsprechend zu einem kontrastreicheren und helleren Darstellungsmodus wechseln. Auch hier könnte die Umschaltung alternativ über eine der Schaltflächen 203 bis 205 vorgenommen werden.

Bei den vom Benutzer auswählbaren Darstellungsmodi kann es sich beispielsweise auch um unterschiedliche Farbschemata der Darstellung handeln, zwischen denen der Benutzer abhängig von seinen persönlichen Präferenzen und eventuell auch von den Umgebungsbedingungen zur Laufzeit umschalten kann.

Ebenfalls zur Laufzeit kann eine Umschaltung zwischen verschiedenen Sprachversionen erfolgen. Damit lässt sich die Darstellung der grafischen Benutzeroberfläche zur Laufzeit umstellen und an unterschiedliche Benutzer anpassen.

Zur Umschaltung des Darstellungsmodus der grafischen Benutzeroberfläche 200 zur Laufzeit ist entsprechend den Ausführungsformen der vorliegenden Erfindung vorgesehen, sowohl den Darstellungsmodus im Anzeigebereich der Rahmenapplikation 109 als auch den Darstellungsmodus in den Anzeigefenstern 206, 207 der verschiedenen Treiber gemeinsam umzuschalten.

Dadurch wird eine Darstellung auf der grafischen Benutzeroberfläche erreicht, bei der die jeweiligen Anzeigebereiche der Rahmenapplikation und zumindest der Treiber, die diese Umschaltung unterstützen, im selben Darstellungsmodus angezeigt werden. Wenn zu einem späteren Zeitpunkt ein weiterer Treiber gestartet und ein Anzeigefenster für diesen Treiber geöffnet wird, dann erfolgt die Initialisierung dieses neu gestarteten Treibers entsprechend dem gerade aktuellen Darstellungsmodus.

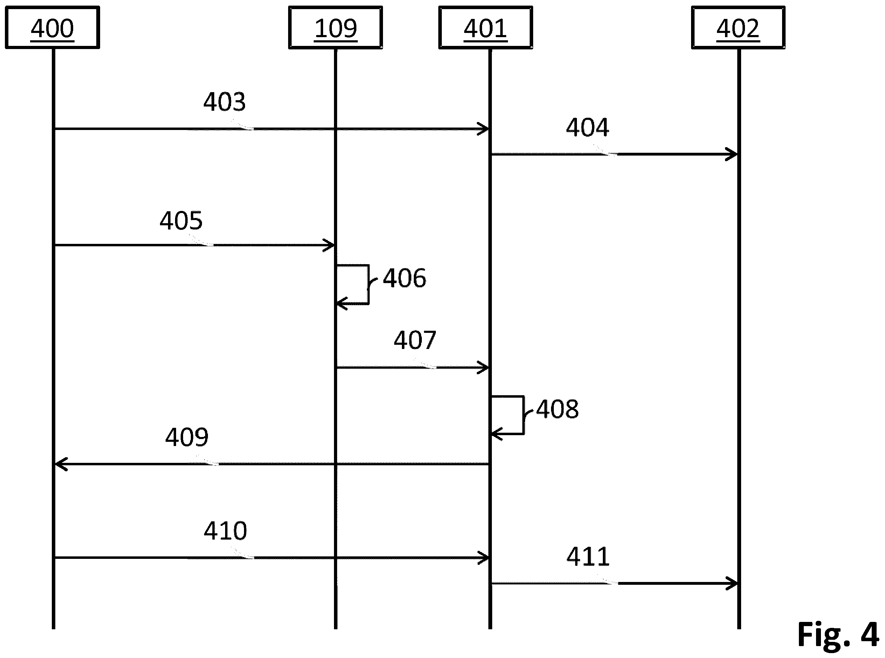

In Fig. 4 ist der gesamte Kommunikationsablauf für die Durchführung dieser koordinierten Umschaltung des Darstellungsmodus im Überblick dargestellt. An diesem Kommunikationsablauf sind der Benutzer 400, die Rahmenapplikation 109, ein Treiber 401 (mit Benutzeroberfläche und Verarbeitungslogik) sowie ein Feldgerät 402 beteiligt. Anhand von Fig. 4 ist der gesamte Kommunikationsablauf für das Beispiel der Umschaltung vom Nicht-Touch-Modus in den Touch-Modus gezeigt.

Zunächst befinden sich die Rahmenapplikation 109 und die Treiber im Nicht-Touch-Modus. Dementsprechend ist die grafische Benutzeroberfläche sowohl für die Rahmenapplikation 109 als auch für die jeweils angezeigten Treiber auf eine für den PC-Bildschirm geeignete Auflösung eingestellt. Entsprechend dem Pfeil 403 kann der Benutzer 400 mit Hilfe von Tastatur und Maus mit dem Treiber 401 interagieren und beispielsweise Wertebereiche anpassen. Die Daten werden entsprechend dem Pfeil 404 zum Feldgerät 402 geschrieben.

Im Schritt 405 aktiviert der Benutzer 400 den Touch-Modus, indem er beispielsweise eine der Schaltflächen 203 bis 205 im Anzeigebereich der Rahmenapplikation 109 betätigt. Daraufhin wird im Schritt 406 der Darstellungsmodus der Rahmenapplikation 109 vom Nicht-Touch-Modus in den Touch-Modus umgeschaltet. Dementsprechend wird die Anzeige im Anzeigebereich der Rahmenapplikation 109 auf eine größere Darstellung umgestellt.

Als nächstes ist es erforderlich, den Darstellungsmodus auch in den Anzeigefenstern 206, 207 der Treiber vom Nicht-Touch-Modus in den Touch-Modus umzuschalten. Hierzu werden die Treiber von der Rahmenapplikation 109 veranlasst, den Darstellungsmodus entsprechend umzuschalten. Diese Umschaltung des Darstellungsmodus der Treiber kann für sämtliche in der Gerätezugriffssoftware instantiierten Treiber und sonstige Nutzsoftwarekomponenten vorgenommen werden. Insbesondere bei umfangreicheren Feldbussystemen ist dies jedoch sehr aufwändig. Insofern ist es unter dem Gesichtspunkt des Signalisierungsaufwands vorteilhaft, lediglich für diejenigen Treiber eine Umschaltung des Darstellungsmodus durchzuführen, die gerade in Anzeigefenstern 206, 207 angezeigt werden. Informationen über die gerade aktiven Anzeigefenster 206, 207 kann die Rahmenapplikation 109 von einer oder mehreren Treiberverwaltungskomponenten erhalten, welche Teil der Rahmenapplikation 109 sind. Die mindestens eine Treiberverwaltungskomponente verwaltet die in die Rahmenapplikation 109 eingebundenen Treiber bzw. DTMs und verfolgt, welche Treiber augenblicklich geöffnet sind. Insofern kann die Rahmenapplikation 109 durch Abfragen der mindestens einen Treiberverwaltungskomponente Informationen darüber erhalten, welche Anzeigefenster 206, 207 gerade geöffnet sind. Die Umschaltung des Darstellungsmodus wird dann lediglich für die gerade geöffneten Treiber durchgeführt, was den Signalisierungsaufwand deutlich verringert.

Insofern wird je nach Ausführungsform entweder bei sämtlichen instantiierten Treibern oder aber vorzugsweise nur bei den momentan geöffneten Treibern eine Umschaltung vom Nicht-Touch-Modus in den Touch-Modus veranlasst. Die Umschaltung der Treiber erfolgt vorzugsweise über eine Standardschnittstelle, über die jeder der Treiber mit der Rahmenapplikation 109 kommuniziert. In dieser Standardschnittstelle ist ein umfangreicher Parametersatz für die verschiedenen Funktionen der jeweiligen Komponente des Feldbussystems, für die der Treiber zuständig ist, vorgesehen. In dieser Standardschnittstelle kann beispielsweise ein Parameter "TouchModeEnabled" vorgesehen sein, mit dem der Darstellungsmodus des jeweiligen Treibers im jeweiligen Anzeigefenster 206, 207 eingestellt werden kann. Zur Neuparametrierung dieses Parameters "TouchModeEnabled" fragt die Rahmenapplikation 109 zunächst von dem jeweiligen Treiber mittels einer Abfragefunktion ab, ob der jeweilige Treiber den Parameter "TouchModeEnabled" unterstützt. Falls der jeweilige Treiber für einen Wechsel des Darstellungsmodus ausgelegt ist, zeigt die Abfragefunktion an, dass der Parameter "TouchModeEnabled" existiert. Wenn der Parameter nicht existiert, zeigt dies an, dass der jeweilige Treiber nicht für eine derartige Umschaltung des Darstellungsmodus ausgelegt ist.

Nachdem die Rahmenapplikation 109 die Rückmeldungen der verschiedenen Treiber erhalten hat, setzt die Rahmenapplikation 109 in Schritt 407 bei denjenigen Treibern, die eine Umschaltung des Darstellungsmodus unterstützen, den Wert des Parameters "TouchModeEnabled" auf den Wert für den Touch-Modus. Daraufhin wird im Schritt 408 bei denjenigen Treibern, die für eine derartige Umschaltung ausgelegt sind, der Darstellungsmodus auf den Touch-Modus umgeschaltet. Dementsprechend wird in den Anzeigefenstern 206, 207 das Layout, die Größe der Fonts und Schaltflächen an den Touch-Modus angepasst. Entsprechend Schritt 409 wird dem Benutzer 400 jetzt eine einheitliche grafische Benutzeroberfläche 200 angezeigt, in der sowohl der Anzeigebereich für die Rahmenapplikation 109 als auch die Anzeigefenster 206, 207 der gerade geöffneten Treiber auf eine für den Touch-Modus geeignete Darstellung umgeschaltet sind, so dass der Benutzer 400 sowohl im Anzeigebereich der Rahmenapplikation 109 als auch in den einzelnen Anzeigefenstern 206, 207 für die jeweiligen Treiber seine Eingaben per Touchbedienung vornehmen kann.

Entsprechend dem Pfeil 410 kann der Benutzer 400 jetzt mit Hilfe von Toucheingaben mit dem Treiber 401 interagieren und beispielsweise Wertebereiche anpassen. Die Daten werden entsprechend dem Pfeil 411 zum Feldgerät 402 geschrieben.

## Patentansprüche

1. Ein Verfahren zum Ändern des Darstellungsmodus einer Gerätezugriffssoftware (108), mit der auf Komponenten eines Feldbussystems (100) zugegriffen werden kann, wobei die Gerätezugriffssoftware (108) eine Rahmenapplikation (109), mindestens eine in die Rahmenapplikation (109) eingebundene Treiber- oder Nutzsoftwarekomponente (110-114) und eine grafische Benutzeroberfläche mit einem Anzeigebereich für die Rahmenapplikation und mindestens einem Anzeigebereich für die mindestens eine in die Rahmenapplikation eingebundene Treiber- oder Nutzsoftwarekomponente umfasst, wobei zwischen der Rahmenapplikation (109) und der mindestens einen Treiber- oder Nutzsoftwarekomponente (110-114) jeweils eine Schnittstelle vorgesehen ist, und wobei das Verfahren **gekennzeichnet ist durch**:
- Umschalten der Rahmenapplikation (109) von einem ersten Darstellungsmodus in einen vom ersten Darstellungsmodus verschiedenen zweiten Darstellungsmodus, wobei ein Darstellungsmodus die Darstellung von Daten auf der grafischen Benutzeroberfläche definiert;
- Ändern von mindestens einem Parameter zumindest in einem Teil der Treiber- oder Nutzsoftwarekomponenten (110-114) über die jeweilige Schnittstelle **durch** die Rahmenapplikation (109), wobei die Änderung des mindestens einen Parameters eine Umschaltung des Darstellungsmodus vom ersten Darstellungsmodus zum zweiten Darstellungsmodus in mindestens einer Treiber- oder Nutzsoftwarekomponente des Teils der Treiber- oder Nutzsoftwarekomponenten (110-114) bewirkt.

2. Verfahren nach Anspruch 1, **dadurch gekennzeichnet, dass** die Umschaltung zur Laufzeit der Rahmenapplikation und der mindestens einen Treiber- oder Nutzsoftwarekomponente erfolgt.

3. Verfahren nach Anspruch 1 oder Anspruch 2, **dadurch gekennzeichnet, dass** die Darstellung in dem Anzeigebereich für die Rahmenapplikation und in mindestens einem der Anzeigebereiche für die in die Rahmenapplikation eingebundenen Treiber- oder Nutzsoftwarekomponenten von dem ersten Darstellungsmodus in den zweiten Darstellungsmodus umschaltbar ist.

4. Verfahren nach einem der Ansprüche 1 bis 3, **dadurch gekennzeichnet, dass** in die Rahmenapplikation Treiber- oder Nutzsoftwarekomponenten entsprechend einem oder mehreren der folgenden Standards einbindbar sind: DTM, DD, EDD, EDS, FDI Device Packages.

5. Verfahren nach einem der Ansprüche 1 bis 3, **dadurch gekennzeichnet, dass** es sich bei der Rahmenapplikation um eine FDT-Rahmenapplikation handelt und dass in die FDT-Rahmenapplikation Treiber- und Nutzsoftwarekomponenten des Standards DTM einbindbar sind.

6. Verfahren nach einem der Ansprüche 1 bis 5, **dadurch gekennzeichnet, dass** es sich bei der Rahmenapplikation um eine FDT-Rahmenapplikation handelt und dass es sich bei der Schnittstelle zwischen der Rahmenapplikation und der mindestens einen Treiber- oder Nutzsoftwarekomponente um eine FDT-Standardschnittstelle handelt.

7. Verfahren nach einem der Ansprüche 1 bis 5, **dadurch gekennzeichnet, dass** es sich bei der Schnittstelle zwischen der Rahmenapplikation und der mindestens einen Treiber- oder Nutzsoftwarekomponente um eine separate Schnittstelle der Rahmenapplikation zu der mindestens einen Treiber- oder Nutzsoftwarekomponente handelt.

8. Verfahren nach einem der Ansprüche 1 bis 7, **gekennzeichnet durch** mindestens eines von folgenden:
- die grafische Benutzeroberfläche der Gerätezugriffssoftware weist mindestens eine Schaltfläche auf, mit der der Darstellungsmodus umschaltbar ist;
- die Änderung des Darstellungsmodus ist durch Betätigen einer entsprechenden Schaltfläche in einer grafischen Benutzeroberfläche der Gerätezugriffssoftware auslösbar;
- die Änderung des Darstellungsmodus ist durch ein von der Gerätezugriffssoftware erfasstes Ereignis auslösbar.

9. Verfahren nach einem der Ansprüche 1 bis 8, **dadurch gekennzeichnet, dass** über die Schnittstelle zunächst abgefragt wird, ob eine jeweilige Treiber- oder Nutzsoftwarekomponente die Umschaltung vom ersten Darstellungsmodus zum zweiten Darstellungsmodus unterstützt, und falls diese Umschaltung von der jeweiligen Treiber- oder Nutzsoftwarekomponente unterstützt wird, über die Schnittstelle die Änderung des mindestens einen Parameters der jeweiligen Treiber- oder Nutzsoftwarekomponente zur Umschaltung vom ersten Darstellungsmodus zum zweiten Darstellungsmodus vorgenommen wird.

10. Verfahren nach einem der Ansprüche 1 bis 9, **dadurch gekennzeichnet, dass** lediglich bei momentan in der grafischen Benutzeroberfläche angezeigten Treiber- oder Nutzsoftwarekomponenten eine entsprechende Änderung des mindestens einen Parameters der jeweiligen Treiber- oder Nutzsoftwarekomponente zur Umschaltung vom ersten Darstellungsmodus zum zweiten Darstellungsmodus vorgenommen wird.

11. Verfahren nach Anspruch 10, **dadurch gekennzeichnet, dass** die Rahmenapplikation Informationen über die momentan in der grafischen Benutzeroberfläche angezeigten Treiber- oder Nutzsoftwarekomponenten von einer Treiberverwaltungskomponente der Rahmenapplikation erhält.

12. Verfahren nach einem der Ansprüche 1 bis 11, **gekennzeichnet durch** mindestens eines von folgenden:
- die Gerätezugriffssoftware ist auf einem Host installiert;
- die Gerätezugriffssoftware ist auf einem Host installiert, welcher ein Touchdisplay aufweist;
- die Gerätezugriffssoftware ist auf einem Host installiert, wobei es sich bei dem Host um mindestens einen von folgenden handelt: ein Mobilgerät, ein Mobiltelefon, einen Tablet-Computer, einen PDA, einen Computer, einen Laptop, eine Datenbrille, eine Smartwatch.

13. Verfahren nach einem der Ansprüche 1 bis 12, **gekennzeichnet durch** mindestens eines von folgenden:
- bei dem ersten Darstellungsmodus handelt es sich um einen Nicht-Touch-Modus und bei dem zweiten Darstellungsmodus handelt es sich um einen Touch-Modus;
- bei dem ersten Darstellungsmodus handelt es sich um einen Nicht-Touch-Modus und bei dem zweiten Darstellungsmodus handelt es sich um einen Touch-Modus, wobei der Touch-Modus eine an ein Touchdisplay angepasste grafische Darstellung ermöglicht und wobei der Nicht-Touch-Modus eine für eine Eingabe mit Tastatur und Maus geeignete grafische Darstellung aufweist;
- bei dem ersten Darstellungsmodus handelt es sich um einen Nicht-Touch-Modus und bei dem zweiten Darstellungsmodus handelt es sich um einen Touch-Modus, wobei der Darstellungsmodus entsprechend der von einer Dockingstation eines mobilen Endgeräts gelieferten Information darüber, ob das mobile Endgerät in der Dockingstation befindlich ist oder nicht, ausgewählt wird;
- bei dem ersten Darstellungsmodus handelt es sich um einen Darstellungsmodus für Hochformat und beim zweiten Darstellungsmodus handelt es sich um einen Darstellungsmodus für Querformat;
- bei dem ersten Darstellungsmodus handelt es sich um einen Darstellungsmodus für Hochformat und beim zweiten Darstellungsmodus handelt es sich um einen Darstellungsmodus für Querformat, wobei der Darstellungsmodus entsprechend den von einem Neigungssensor eines mobilen Endgeräts gelieferten Werten ausgewählt wird;
- bei dem ersten und dem zweiten Darstellungsmodus handelt es sich um an verschiedene Displaygrößen eines jeweiligen Endgeräts angepasste Darstellungsmodi;
- bei dem ersten und dem zweiten Darstellungsmodus handelt es sich um an verschiedene Displaygrößen eines jeweiligen Endgeräts angepasste Darstellungsmodi, wobei die jeweilige Displaygröße des Endgeräts aus dem jeweiligen Endgerät ausgelesen wird;
- bei dem ersten und dem zweiten Darstellungsmodus handelt es sich um an verschiedene Umgebungshelligkeiten angepasste Darstellungsmodi;
- bei dem ersten und dem zweiten Darstellungsmodus handelt es sich um an verschiedene Umgebungshelligkeiten angepasste Darstellungsmodi, wobei der Darstellungsmodus entsprechend den von einem Helligkeitssensor erfassten Helligkeitswerten eingestellt wird;
- bei dem ersten und dem zweiten Darstellungsmodus handelt es sich um unterschiedliche Darstellungsmodi für unterschiedliche Sprachversionen;
der erste und der zweite Darstellungsmodus weisen unterschiedliche Farbschemata auf.

14. Eine Gerätezugriffssoftware (108), mit der auf Komponenten eines Feldbussystems (100) zugegriffen werden kann, wobei die Gerätezugriffssoftware (108) eine Rahmenapplikation (109), mindestens eine in die Rahmenapplikation (109) eingebundene Treiber- oder Nutzsoftwarekomponente (110-114) und eine grafische Benutzeroberfläche mit einem Anzeigebereich für die Rahmenapplikation und mindestens einem Anzeigebereich für die mindestens eine in die Rahmenapplikation eingebundene Treiber- oder Nutzsoftwarekomponente umfasst, wobei zwischen der Rahmenapplikation (109) und der mindestens einen Treiber- oder Nutzsoftwarekomponente (110-114) jeweils eine Schnittstelle vorgesehen ist,
**dadurch gekennzeichnet, dass**
die Rahmenapplikation (109) zwischen einem ersten Darstellungsmodus und einem vom ersten Darstellungsmodus verschiedenen zweiten Darstellungsmodus umschaltbar ist, wobei ein Darstellungsmodus die Darstellung von Daten auf der grafischen Benutzeroberfläche definiert,
und wobei die Rahmenapplikation (109) dazu ausgelegt ist, bei einer Änderung des Darstellungsmodus über die jeweilige Schnittstelle zumindest in einem Teil der Treiber- oder Nutzsoftwarekomponenten (110-114) mindestens einen Parameter zu ändern, wobei die Änderung des mindestens einen Parameters eine Umschaltung des Darstellungsmodus vom ersten Darstellungsmodus zum zweiten Darstellungsmodus in mindestens einer Treiber- oder Nutzsoftwarekomponente des Teils der Treiber- oder Nutzsoftwarekomponenten (110-114) bewirkt.

## Claims

1. A method to change the display mode of a piece of device access software (108) that can be used to access components of a fieldbus system (100), wherein the device access software (108) encompasses a frame application (109), at least one driver or user software component (110-114) that is integrated into the frame application (109), and a graphic user interface with a display area for the frame application and at least one display area for the at least one driver or user software component integrated into the frame application, wherein an interface is provided between the frame application (109) and the at least one driver or user software component (110-114), and wherein the method is **characterized by**:
- A switchover of the frame application (109) from a first display mode to a second display mode that differs from the first display mode, wherein a display mode defines the display of data in the graphic user interface;
- A change of at least one parameter in at least one part of the driver or user software components (110-114) by the frame application (109) via the respective interface, wherein the change of the at least one parameter leads to a switchover of the display mode from the first display mode to the second display mode in at least one driver or user software component of the part of the driver or user software components (110-114).

2. Method according to claim 1, **characterized in that** the switchover is performed at the runtime of the frame application and the at least one driver or user software component.

3. Method according to claim 1 or claim 2, **characterized in that** the display in the display area for the frame application and in at least one of the display areas for the driver or user software components integrated into the frame application can be switched over from the first display mode to the second display mode.

4. Method according to one of the claims 1 to 3, **characterized in that** driver or user software components can be integrated into the frame application according to one or more of the following standards: DTM, DD, EDD, EDS, FDI Device Packages.

5. Method according to one of the claims 1 to 3, **characterized in that** the frame application is an FOT frame application and that driver and user software components of the DTM standard can be integrated into the FOT frame application.

6. Method according to one of the claims 1 to 5, **characterized in that** the frame application is an FOT frame application and that the interface between the frame application and the at least one driver or user software component is an FOT standard interface.

7. Method according to one of the claims 1 to 5, **characterized in that** the interface between the frame application and the at least one driver or user software component is a separate interface of the frame application for the at least one driver or user software component.

8. Method according to one of the claims 1 to 7, **characterized by** at least one of the following:
- the graphic user interface of the device access software exhibits at least one button with which the display mode can be switched over;
- the display mode can be switched over by pressing a corresponding button in a graphic user interface of the device access software;
- the display mode can be switched over by an event recorded by the device access software.

9. Method according to one of the claims 1 to 8, **characterized in that** a query is initially issued via the interface to determine whether a respective driver or user software component supports the switchover from the first display mode to the second display mode and, if this switchover is indeed supported by the respective driver or user software component, the change of the at least one parameter of the respective driver or user software component is performed via the interface for switchover from the first display mode to the second display mode.

10. Method according to one of the claims 1 to 9, **characterized in that** a corresponding change of the at least one parameter of the respective driver or user software component for switching over from the first display mode to the second display mode is only made when driver or user software components are currently being displayed in the graphic user interface.

11. Method according to claim 10, **characterized in that** the frame application receives information on the driver or user software component currently being displayed in the graphic user interface from a driver management component of the frame application.

12. Method according to one of the claims 1 to 11, **characterized by** at least one of the following:
- the device access software is installed on a host;
- the device access software is installed on a host that exhibits a touchscreen display;
- the device access software is installed on a host, wherein the host is at least one of the following: a mobile device, a cell phone, a tablet computer, a PDA, a computer, a laptop, a set of data goggles, a smartwatch.

13. Method according to one of the claims 1 to 12, **characterized by** at least one of the following:
- the first display mode is a non-touchscreen mode and the second display mode is a touchscreen mode;
- the first display mode is a non-touchscreen mode and the second display mode is a touchscreen mode, wherein the touchscreen mode facilitates a graphic display adapted for use with a touchscreen display, and wherein the non-touchscreen mode exhibits a graphic display suitable for making entries with a keyboard and mouse;
- the first display mode is a non-touchscreen mode and the second display mode is a touchscreen mode, wherein the display mode is selected on the basis of information provided by a docking station of a mobile terminal as to whether the mobile terminal is currently in the docking station or not;
- the first display mode is a display mode for portrait format and the second display mode is for landscape format;
- the first display mode is a display mode for portrait format and the second display mode is for landscape format, wherein the display mode is selected on the basis of values supplied by an inclination sensor of a mobile terminal;
- the first and the second display mode are display modes that are adjusted to work with different display sizes of a respective terminal;
- the first and the second display mode are display modes that are adjusted to work with different display sizes of a respective terminal, wherein the display size of the terminal is selected based on information provided by the respective terminal;
- the first and the second display mode are display modes that are adjusted to work with different degrees of ambient brightness;
- the first and the second display mode are display modes that are adjusted to work with different degrees of ambient brightness, wherein the display mode is set on the basis of brightness values recorded by a brightness sensor;
- the first and the second display mode are different display modes for different language versions; the first and the second display modes have a different color scheme.

14. A piece of device access software (108) that facilitates access to components of a fieldbus system (100), wherein the device access software (108) encompasses a frame application (109), at least one driver or user software component (110-114) that is integrated into the frame application (109), and a graphic user interface with a display area for the frame application and at least one display area for the at least one driver or user software component that is integrated into the frame application, wherein an interface is provided between the frame application (109) and the at least one driver or user software component (110-114), **characterized in that** the frame application (109) can be switched over between a first display mode and a second display mode that differs from the first display mode, wherein a display mode defines the display of data in the graphic user interface, and wherein the frame application (109) is configured to change at least one parameter via the respective interface in at least one part of the driver or user software components (110-114) following a change of the display mode, wherein the change of the at least one parameter causes a switchover of the display mode from the first display mode to the second display mode in at least one driver or user software component of the part of the driver or user software components (110-114).

## Revendications

1. Procédé destiné à la modification du mode d'affichage d'un logiciel d'accès aux appareils (108), lequel logiciel permet d'accéder aux composants d'un système de bus de terrain (100), le logiciel d'accès aux appareils (108) comprenant une application cadre (109), au moins un composant logiciel de type driver ou utilitaire (110-114) intégré dans l'application cadre (109) et une interface utilisateur graphique avec une zone d'affichage pour l'application cadre et au moins une zone d'affichage pour l'au moins un composant logiciel de type driver ou utilitaire intégré dans l'application cadre, une interface étant respectivement prévue entre l'application cadre (109) et l'au moins un composant logiciel de type driver ou utilitaire (110-114), et le procédé étant **caractérisé par** les étapes suivantes :
- Commutation de l'application cadre (109) d'un premier mode d'affichage dans un deuxième mode d'affichage différent du premier mode d'affichage, un mode d'affichage définissant l'affichage de données sur l'interface utilisateur graphique ;
- Modification d'au moins un paramètre dans au moins une partie des composants logiciels de type driver ou utilitaire (110-114) par l'intermédiaire de l'interface respective par l'application cadre (109), la modification de l'au moins un paramètre provoquant une commutation du mode d'affichage du premier mode d'affichage au deuxième mode d'affichage dans au moins un composant logiciel de type driver ou utilitaire de la partie des composants logiciels de type driver ou utilitaire (110-114).

2. Procédé selon la revendication 1, **caractérisé en ce que** la commutation a lieu pendant l'exécution de l'application cadre et de l'au moins un composant logiciel de type driver ou utilitaire.

3. Procédé selon la revendication 1 ou la revendication 2, **caractérisé en ce que** l'affichage dans la zone d'affichage pour l'application cadre et dans au moins l'une des zones d'affichage pour les composants logiciels de type driver ou utilitaire intégrés dans l'application cadre peut être commuté du premier mode d'affichage dans le deuxième mode d'affichage.

4. Procédé selon l'une des revendications 1 à 3, **caractérisé en ce que** des composants logiciels de type driver ou utilitaire correspondant à un ou plusieurs des standards suivants peuvent être intégrés dans l'application cadre : DTM, DD, EDD, EDS, FDI Device Packages.

5. Procédé selon l'une des revendications 1 à 3, **caractérisé en ce que** l'application cadre est une application cadre FDT et **en ce que** des composants logiciels de type driver et utilitaire du standard DTM peuvent être intégrés dans l'application cadre FDT.

6. Procédé selon l'une des revendications 1 à 5, **caractérisé en ce que** l'application cadre est une application cadre FDT et **en ce que** l'interface entre l'application cadre et l'au moins un composant logiciel de type driver ou utilitaire est une interface standard FDT.

7. Procédé selon l'une des revendications 1 à 5, **caractérisé en ce que** l'interface entre l'application cadre et l'au moins un composant logiciel de type driver ou utilitaire est une interface séparée de l'application cadre avec l'au moins un composant logiciel de type driver ou utilitaire.

8. Procédé selon l'une des revendications 1 à 7, **caractérisé par** au moins l'un des éléments suivants :
- l'interface utilisateur graphique du logiciel d'accès aux appareils comporte au moins un bouton permettant de changer de mode d'affichage ;
- le changement de mode d'affichage peut être déclenché en actionnant un bouton correspondant dans une interface utilisateur graphique du logiciel d'accès aux appareils ;
- le changement de mode d'affichage peut être déclenché par un événement détecté par le logiciel d'accès aux appareils.

9. Procédé selon l'une des revendications 1 à 8, **caractérisé en ce que** l'on demande d'abord par l'intermédiaire de l'interface si un composant logiciel de type driver ou utilitaire respectif supporte la commutation du premier mode d'affichage au deuxième mode d'affichage, et si cette commutation est prise en charge par le composant logiciel de type driver ou utilitaire respectif, on effectue par l'intermédiaire de l'interface la modification d'au moins un paramètre du composant logiciel de type driver ou utilitaire respectif pour la commutation du premier mode d'affichage au deuxième mode d'affichage.

10. Procédé selon l'une des revendications 1 à 9, **caractérisé en ce qu'**une modification correspondante d'au moins un paramètre du composant logiciel de type driver ou utilitaire respectif pour passer du premier mode d'affichage au deuxième mode d'affichage est effectuée uniquement pour des composants logiciels de type driver ou utilitaire actuellement affichés dans l'interface utilisateur graphique.

11. Procédé selon la revendication 10, **caractérisé en ce que** l'application cadre reçoit des informations sur les composants logiciels de type driver ou utilitaire actuellement affichés dans l'interface utilisateur graphique d'un composant de gestion de drivers de l'application cadre.

12. Procédé selon l'une des revendications 1 à 11, **caractérisé par** au moins l'un des éléments suivants :
- le logiciel d'accès aux appareils est installé sur un hôte ;
- le logiciel d'accès aux appareils est installé sur un hôte qui comprend un écran tactile ;
- le logiciel d'accès aux appareils est installé sur un hôte, hôte concernant lequel il s'agit au moins de l'un des appareils suivants : un appareil mobile, un téléphone mobile, une tablette, un PDA, un ordinateur, un ordinateur portable, des lunettes de données, une montre intelligente.

13. Procédé selon l'une des revendications 1 à 12, **caractérisé par** au moins un des éléments suivants :
- le premier mode d'affichage est un mode non tactile et le deuxième mode d'affichage est un mode tactile ;
- le premier mode d'affichage est un mode non tactile et le deuxième mode d'affichage est un mode tactile, le mode tactile permettant un affichage graphique adapté à un écran tactile et le mode non tactile présentant un affichage graphique adapté à une saisie au clavier et à la souris ;
- le premier mode d'affichage est un mode non tactile et le deuxième mode d'affichage est un mode tactile, le mode d'affichage étant sélectionné en fonction des informations fournies par une station d'accueil d'un terminal mobile indiquant si le terminal mobile se trouve ou non dans la station d'accueil ;
- le premier mode d'affichage est un mode d'affichage en mode portrait et le deuxième mode d'affichage est un mode d'affichage en mode paysage ;
- le premier mode d'affichage est un mode d'affichage en mode portrait et le deuxième mode d'affichage est un mode d'affichage en mode paysage, le mode d'affichage étant sélectionné en fonction des valeurs fournies par un capteur d'inclinaison d'un terminal mobile ;
- le premier et le deuxième mode d'affichage sont des modes d'affichage adaptés à différentes tailles d'affichage d'un terminal respectif ;
- le premier et le deuxième mode d'affichage sont des modes d'affichage adaptés à différentes tailles d'affichage d'un terminal respectif, la taille d'affichage respective du terminal étant lue à partir du terminal respectif ;
- le premier et le deuxième mode d'affichage sont des modes d'affichage adaptés à différentes luminosités ambiantes ;
- le premier et le deuxième mode d'affichage sont des modes d'affichage adaptés à différentes luminosités ambiantes, le mode d'affichage étant réglé en fonction des valeurs de luminosité détectées par un capteur de luminosité ;
- le premier et le deuxième mode d'affichage sont des modes d'affichage différents pour des versions linguistiques différentes ;
le premier et le deuxième mode d'affichage présentant des schémas de couleurs différents.

14. Logiciel d'accès aux appareils (108) permettant d'accéder à des composants d'un système de bus de terrain (100), le logiciel d'accès aux appareils (108) comprenant une application cadre (109), au moins un composant logiciel de type driver ou utilitaire (110-114) intégré dans l'application cadre (109) et une interface utilisateur graphique avec une zone d'affichage pour l'application cadre et au moins une zone d'affichage pour l'au moins un composant logiciel de type driver ou utilitaire intégré dans l'application cadre, une interface étant respectivement prévue entre l'application cadre (109) et l'au moins un composant logiciel de type driver ou utilitaire (110-114),
**caractérisé en ce que**
l'application cadre (109) peut être commutée entre un premier mode d'affichage et un deuxième mode d'affichage différent du premier mode d'affichage, un mode d'affichage définissant l'affichage de données sur l'interface utilisateur graphique, et l'application cadre (109) étant conçue, lors d'une modification du mode d'affichage par l'intermédiaire de l'interface respective, pour modifier au moins un paramètre au moins dans une partie des composants logiciels de type driver ou utilitaire (110-114), la modification de l'au moins un paramètre provoquant une commutation du mode d'affichage du premier mode d'affichage au deuxième mode d'affichage dans au moins un composant logiciel de type driver ou utilitaire de la partie des composants logiciels de type driver ou utilitaire (110-114).
